# EUROPEAN PATENT SPECIFICATION

(11) **EP 2 644 947 B1**
(45) Date of publication and mention of the grant of the patent: **20.08.2014**
(21) Application number: 13160761.6
(22) Date of filing: 25.03.2013
(51) Int. Cl.: F16H 57/04, B60K 7/00

(54) **Drive unit**
Antriebseinheit
Unité d'entraînement

(30) Priority: 30.03.2012 JP 2012081074
(43) Date of publication of application: 02.10.2013
(73) Proprietor: Honda Motor Co., Ltd., Tokyo 107-8556 (JP)
(72) Inventor: Odajima, Masaru, Wako-shi, Saitama 351-0193 (JP)
(74) Representative: Stevens, Jason Paul

(56) References cited:
- JP-A- 2006 248 417
- JP-A- 2008 184 111

## Description

The present invention relates to a drive unit formed by integrating an electric motor and a reducer.

In electric vehicles, a drive method is employed in which an output of an electric motor (hereinafter, a motor) is reduced in speed by a reducer to drive a drive wheel. A structure in which the motor and the reducer are independently disposed and a structure in which the motor and the reducer are integrated with each other have both been put to practical use. Various proposals have been made for the structure in which the motor and the reducer are integrated with each other (see, for example, Japanese Patent Application Publication No. 2006-248417, and in particular Fig. 7).

As shown in Fig. 7 of Japanese Patent Application Publication No. 2006-248417, a vehicle wheel driving device (20) includes an in-wheel motor (30) and a gear mechanism (50) integrated with the in-wheel motor (30) (the numbers in parentheses indicate reference numerals as used in Japanese Patent Application Publication No. 2006-248417). A motor shaft (36) is rotatably supported on a motor housing (31) by multiple bearings. Moreover, an output shaft supporting a large gear (52) is rotatably supported by multiple bearings (71, 72).

The bearings supporting the motor shaft (36) and the bearings (71, 72) supporting the output shaft require lubrication. Thus, in Japanese Patent Application Publication No. 2006-248417, an oil guide recessed portion (43b) is provided in a gear housing chamber (43), an oil flow hole (36a) is provided in the motor shaft (36) in an axial direction thereof, and discharge holes (61 a) extending in radial directions from the oil flow hole (36a) are provided. Some of the oil thrown up by the large gear (52) is used to lubricate the bearings (71, 72). The rest of the oil thrown up by the large gear (52) flows through the oil guide recessed portion (43b), the oil flow hole (36a), and the discharge holes (61 a) in this order, and is then discharged into the motor housing (31). The multiple bearings supporting the motor shaft (36) are thus lubricated with the discharged oil.

A coil portion (33) serving as a stator is housed in the motor housing (31). A rotor (34) can be rotated by supplying electric power to the coil portion (33) from the outside by using a harness.

The harness penetrates the motor housing (31). Sealing is required to prevent oil from leaking from the penetration hole. Sealing needs to be maintained by interposing a sealing member between the motor housing (31) and a lid (44), for example.

In other words, in the structure of Japanese Patent Application Publication No. 2006-248417, a sealing structure needs to be employed because the motor housing (31) is filled with oil drops. Accordingly, the structure of the in-wheel motor (30) becomes complex and the cost of the in-wheel motor (30) is increased.

However, it is desired to reduce the cost of the wheel drive device, and there is a demand for a drive device (drive unit) in which the sealing structure for the motor can be simplified.

It is an object of at least the preferred embodiment of the present invention to provide a drive unit in which the aforementioned sealing structure for the motor can be simplified.

According to a first aspect of the present invention, there is provided a drive unit which includes: a centre case; a motor case attached to one side surface of the centre case and supporting a stator; a reducer case attached to another side surface of the centre case; a motor shaft penetrating the centre case, supporting a rotor, and having one end supported by the motor case via a first bearing and another end supported by the reducer case via a second bearing; a drive gear provided on the motor shaft and housed in the reducer case; a driven gear rotated by a drive force of the drive gear and having one end supported by the centre case via a third bearing and another end supported by the reducer case via a fourth bearing; and an output shaft extending from the driven gear to penetrate the reducer case, and in which a motor output is reduced in speed and then outputted from the output shaft, **characterized in that** oil is held in the reducer case in such a way that part of the driven gear is immersed in the oil, a first oil pocket portion in which oil is reserved is provided between the one end of the motor shaft and the motor case, a second oil pocket portion in which oil is reserved is provided between the other end of the motor shaft and the reducer case, the first bearing and the second bearing each include a seal configured to partition a corresponding one of the pocket portions from an adjacent chamber, the reducer case is provided with an oil receiving portion configured to receive thrown-up oil in a portion surrounding the drive gear and is also provided with a communication hole through which oil reserved in the oil receiving portion flows to the second oil pocket portion, the motor shaft is provided with a motor-shaft oil passage through which oil reserved in the second oil pocket portion flows to the first oil pocket portion, the motor case is provided with a discharged oil passage through which oil reserved in the first oil pocket portion is discharged, and the centre case is provided with a return oil passage which is connected to the discharged oil passage and through which oil from the discharged oil passage is returned into the reducer case.

With this arrangement, the motor shaft is supported by the first and second bearings, while the output shaft is supported by the third and fourth bearings. The first to fourth bearings need to be lubricated with oil.

For this reason, the first oil pocket portion is provided between the one end of the motor shaft and the motor case while the second oil pocket portion in which oil is reserved is provided between the other end of the motor shaft and the reducer case. Moreover, the motor shaft is provided with the motor-shaft oil passage through which the oil reserved in the second oil pocket portion flows to the first oil pocket portion, and the reducer case is provided with the oil receiving portion and the communication hole through which the oil reserved in the oil receiving portion flows to the second oil pocket portion.

The oil reserved in the reducer case is thrown up by the driven gear and part of the oil is used to lubricate the second to fourth bearings. The rest of the oil thrown up by the driven gear is received by the oil receiving portion and flows through the communication hole, the second oil pocket portion, the motor-shaft oil passage, and the first oil pocket portion in this order. Thereafter, the oil is used to lubricate the first bearing. The oil supplied to the second to fourth bearings is reserved in the reducer case. The oil supplied to the first bearing flows through the motor-shaft oil passage and the first oil pocket portion and does not leak into the motor case.

Since the inside of the motor case is dry, no hydraulic pressure is applied thereto, although the motor case is sealed. Accordingly, no special measures for wet conditions are required, and hence, the sealing structure may be simple. In other words, the present invention provides a drive unit in which a sealing structure for the motor can be simplified while lubrication is thoroughly performed therein.

Preferably, the first bearing is a single seal bearing including an outer race, an inner race, a rolling body, and a sealing member sealing a space between the outer race and the inner race in a portion which is closer to the second bearing than the rolling body is, and the second bearing is a single seal bearing including an outer race, an inner race, a rolling body, and a sealing member sealing a space between the outer race and the inner race in a portion which is closer to the second oil pocket portion than the rolling body is.

Thus, the first bearing includes a sealing member in the portion which is closer to the second bearing than the rolling body is. Since the sealing member is disposed on the side closer to the second bearing, the first bearing can be lubricated well with the oil reserved in the first oil pocket portion.

Moreover, the second bearing includes a sealing member in the portion which is closer to the second oil pocket portion than the rolling body is. Since the sealing member is disposed on the side closer to the second oil pocket portion, the second bearing can be lubricated well with the oil thrown up by the driven gear.

In addition, the first bearing and the second bearing are each single seal bearings including a sealing member sealing the space between the outer race and the inner race. Similar effects can also be obtained when an oil seal is attached beside the first bearing and an oil seal is disposed beside the second bearing. However, this increases the number of parts and increases the axial dimension, so that a compact design cannot be achieved.

In contrast, by using single seal bearings in which the sealing members are incorporated in the bearings, it is possible to reduce the number of parts and also to reduce the axial dimension.

Preferably, the oil receiving portion includes a pocket-shaped arcuate groove formed by an arcuate wall which stands in the reducer case to surround the drive gear, and an opening portion configured to receive oil thrown up by the drive gear in a tangential direction is formed in an upper portion of the arcuate groove.

With this arrangement, droplets of oil can be efficiently received by the oil receiving portion.

In a further preferred form, the opening portion is disposed above a rotation centre of the motor shaft and the communication hole is arranged below the opening portion.

With this arrangement, the oil reserved in the oil receiving portion can smoothly flow to the second oil pocket portion via the communication hole by the effect of gravity. As a result, flow of oil to the first oil pocket portion is promoted and lubrication of the first bearing can be improved.

Preferably, an inlet of the discharged oil passage is provided at a height equal to or lower than that of a rotation centre of the motor shaft.

Thus, since the inlet of the discharged oil passage is at a relatively low height, the oil reserved in the first oil pocket portion can be efficiently discharged to the discharged oil passage.

Preferably, a bottom surface of the centre case and a bottom surface of the reducer case are arranged below a bottom surface of the motor case and the return oil passage is arranged at a height almost equal to that of the bottom surface of the motor case.

With this arrangement, since the return oil passage is at a height almost equal to that of the bottom surface of the motor case, the discharged oil passage can be extended to the bottom surface of the motor case. Specifically, the discharged oil passage extends from a portion near the rotation centre of the motor shaft to the bottom surface of the motor case. Hence, the height dimension of the discharged oil passage can be increased. The hydraulic head is thereby increased and the oil inside the discharged oil passage can efficiently flow down and quickly return into the reducer case.

Preferably, the centre case is provided with an oil filler into which oil can be poured.

Generally, a level gauge is attached to the oil filler in such a way as to be capable of being inserted and pulled out. The oil filler can be provided in either one of the centre case and the reducer case.

When the oil filler including the level gauge is provided in the reducer case, the level gauge may interfere with the driven gear incorporated in the reducer case. The size of the reducer case may need to be increased to avoid the interference.

In contrast, when the oil filler is provided in the centre case, there is no worry of the level gauge interfering with the driven gear. As a result, the reducer case can be made compact.

A preferred embodiment of the invention will now be described by way of example only and with reference to the accompanying drawings, in which:
Fig. 1 is a perspective view of an electric vehicle including a drive unit according to an embodiment of the present invention;
Fig. 2 is a rear view of the electric vehicle;
Fig. 3 is an enlarged view of a portion of Fig. 2;
Fig. 4 is an exploded view around a rear wheel;
Fig. 5 is a cross-sectional view of the rear wheel and a drive unit;
Fig. 6 is an enlarged cross-sectional view of a portion of Fig. 5;
Fig. 7 is a cross-sectional view of a portion of each of the first and second bearings;
Fig. 8 is a cross-sectional view taken along the line 8-8 of Fig. 5;
Fig. 9 is a view in the direction of the arrow 9 of Fig. 6;
Fig. 10 is a perspective view of a bearing housing portion;
Fig. 11 is a cross-sectional plan view of the bearing housing portion;
Fig. 12 is a side view of the drive unit; and
Fig. 13 is a cross-sectional view taken along the line 13-13 of Fig. 12.

A presently preferred embodiment of the invention is described below with reference to the accompanying drawings. Note that the drawings are to be viewed in an orientation in which the reference numerals can be read properly.

A drive unit according to the present invention can be used as a drive source of an electric vehicle or carriage, as well as a drive source of an industrial machine. Although usage of the drive unit is not particularly limited, description is given below of an example in which the drive unit is installed in an electric vehicle. Moreover, terms such as "front", "rear", "left", and "right" are to be understood as perceived by a driver of the electric vehicle.

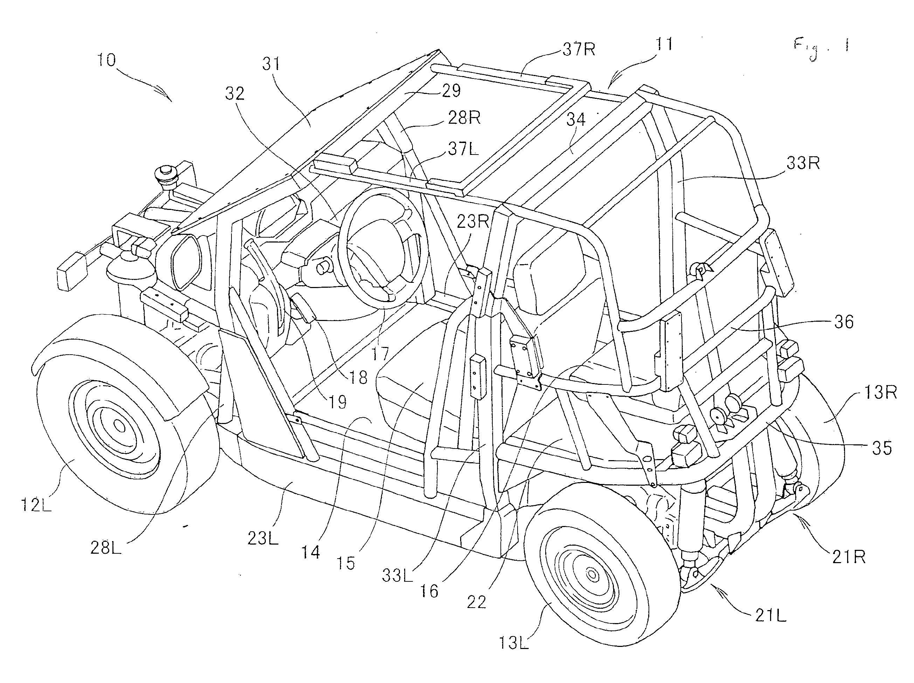

As shown in Fig. 1, an electric vehicle 10 is a narrow vehicle comprising a vehicle body frame 11 provided with a front wheel 12L (here and in the following, L is a suffix indicating left) and rear wheels 13L, 13R (here and in the following, R is a suffix indicating right). A driver seat 15 is provided on a floor 14. A passenger seat 16 is provided behind the driver seat 15. A steering wheel 17, a brake pedal 18, and a parking brake lever 19 are provided in front of the driver seat 15. Although not illustrated in Fig. 1, the vehicle has a right front wheel. In other words, the electric vehicle 10 is a narrow four-wheeled vehicle.

The passenger seat 16 is disposed between the left and right rear wheels 13L, 13R and above and between suspension devices 21 L, 21 R. The passenger seat 16 may be replaced with a rear cargo bed. Alternatively, the passenger seat 16 may be detachably attached to a rear cargo bed 22.

The vehicle body frame 11 has left and right side sills 23L, 23R as main elements.

Furthermore, front upper frames 28L, 28R extend upward respectively from front end portions of the side sills 23L, 23R, and a cross sub-member 29 extends between upper ends of the front upper frames 28L, 28R. A front shield 31 is attached to the front upper frames 28L, 28R and the cross sub-member 29 from the front.

A dashboard 32 is located between the left and right front upper frames 28L, 28R. The steering wheel 17 is disposed slightly to the left of the lateral centre of the dashboard 32, and the parking brake lever 19 is disposed to the left of the steering wheel 17.

Rear upper frames 33L, 33R extend upward respectively from rear end portions of the side sills 23L, 23R, and a cross sub-member 34 extends between upper ends of the rear upper frames 33L, 33R. Furthermore, a square-U-shaped rear subframe 35 extends from the rear upper frames 33L, 33R at a position above the rear wheels 13L, 13R to surround the passenger seat 16 from left, right, and rear. A cage-shaped cage frame 36 extends from the rear upper frames 33L, 33R and the cross sub-member 34 to surround the passenger seat 16 at a position above the rear subframe 35. Longitudinal members 37L, 37R are laid between the front cross sub-member 29 and the rear cross sub-member 34, and a vehicle cabin is thus formed.

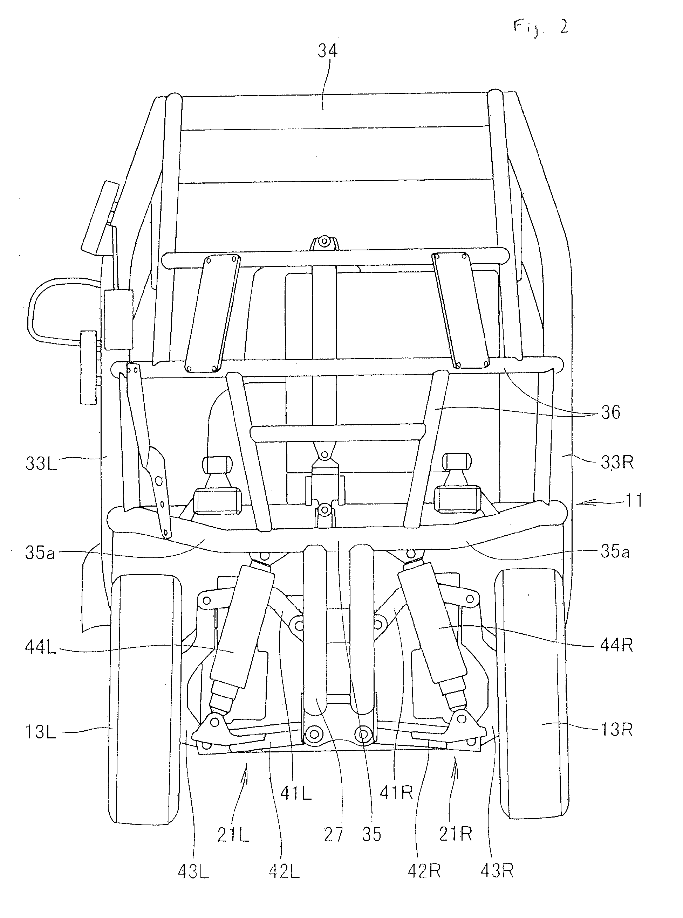

As shown in Fig. 2, the rear wheels 13L, 13R (which are left and right drive wheels) are supported by the suspension devices 21 L, 21 R to be vertically swingable on the vehicle body frame 11. The rear wheels 13L, 13R are each inclined in such a way that an upper end thereof is closer to the lateral centre of the vehicle than a lower end thereof is.

The rear subframe 35 which extends in the lateral direction of the vehicle is bent upward at regions over the rear wheels 13L, 13R. Providing bent portions 35a, 35b can ensure sufficient spaces to accommodate upward swinging movement of the rear wheels 13L, 13R.

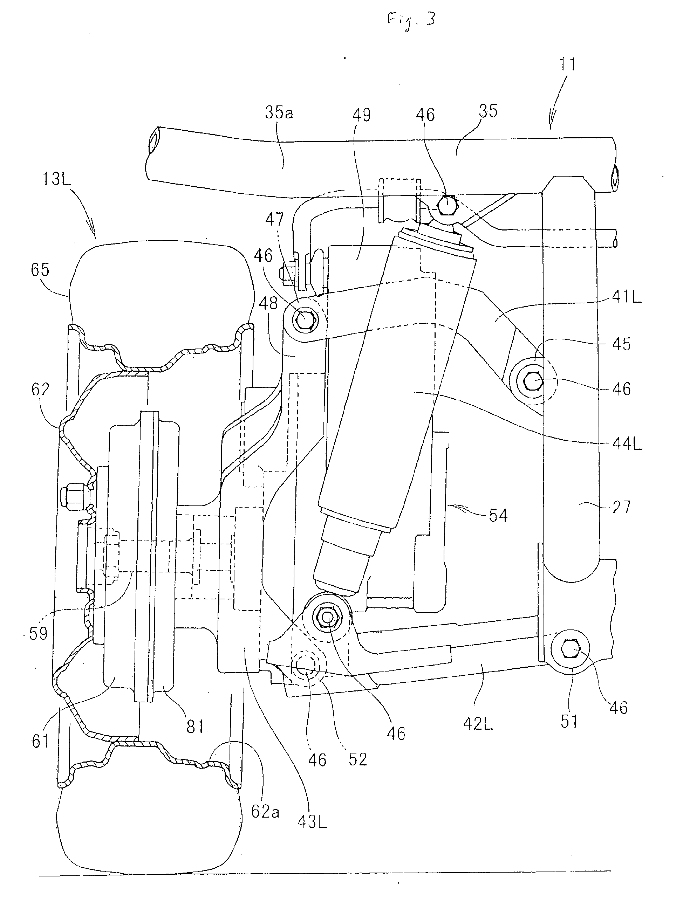

The left suspension device 21 L shown in Fig. 3 includes an upper arm 41 L and a lower arm 42L which extend laterally leftwards from the vehicle body frame 11, a knuckle 43L which is connected to distal ends of the arms 41 L, 42L, and a rear cushion (shock absorber) 44L which extends between the end of the lower arm 42L and the vehicle body frame 11 and cushions vertical movements of the rear wheels 13L, 13R.

The right suspension device 21 R is identical, except that the suffixes of the reference numerals are changed from L to R, and so detailed description of the right suspension device 21 R is omitted.

As shown in Fig. 3, the upper arm 41 L is connected to the vehicle body frame 11 (specifically, the rear portion subframe 27) at a vehicle body frame side connection portion 45 with a connector 46. In a preferred form, the connector 46 is a bolt formed by providing a bolt head and a female screw on a pin extending in a near-far direction of the drawing (perpendicular to the plane of the drawing).

The distal end of the upper arm 41 L is connected to an upper arm portion 48 of the knuckle 43L at a joint portion 47 with a connector 46.

The upper arm 41 L is a V-shaped member having an intermediate portion (the central portion in the lateral direction of the vehicle) protruding upward. The vehicle body frame side connection portion 45 is positioned lower than the joint portion 47.

A motor case 49 is disposed on the far side of the upper arm 41 L in the drawing (so that it is located further forward than the upper arm 41 L with respect to the vehicle). Forming the upper arm 41 L in a so-called "inverted-V shape" allows the upper arm 41 L to avoid the motor case 49.

The lower arm 42L is also connected to a lower portion of the vehicle body frame 11 (specifically, the rear portion subframe 27) at a lower vehicle body frame side connection portion 51 with a connector 46, and is connected to a lower portion of the knuckle 43L at a lower joint portion 52 with a connector 46.

The rear cushion 44L is disposed so as to extend in an oblique vertical direction. An upper portion of the rear cushion 44L is connected to the vehicle body frame 11 (specifically, the rear subframe 35) with a connector 46, while the lower portion thereof is connected to the lower arm 42L with a connector 46.

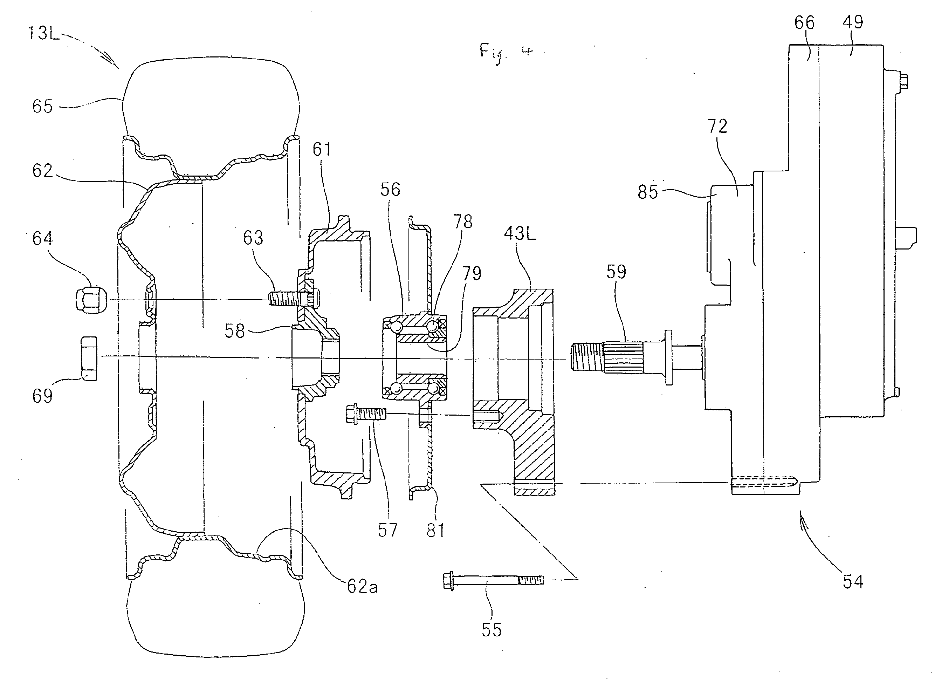

The rear wheel 13L and a drive unit 54 are attached to the knuckle 43L in such a way that the knuckle 43L is interposed between the rear wheel 13L and the drive unit 54 (as will be described in detail with reference to Fig. 4). The drive unit 54 serves the role of driving the rear wheel 13L.

As shown in Fig. 4, the drive unit 54 is fixed to the surface of the knuckle 43L nearer to the lateral centre of the vehicle body with a bolt 55. Moreover, a bearing case 56 is fixed to the surface of the knuckle 43L on the lateral outer side relative to the vehicle (the side nearer to wheel 62) with a bolt 57. A wheel supporting member 58 is disposed on the lateral outer side of the bearing case 56. The wheel supporting member 58 is spline-coupled to an output shaft 59 extending from the drive unit 54 and is caused to rotate by rotation of the output shaft 59.

A brake drum 61 and a wheel 62 of the rear wheel 13L are fastened together to the wheel supporting member 58 with a bolt 63 and a nut 64. The rear wheel 13L and the drive unit 54 are thus attached to the knuckle 43L.

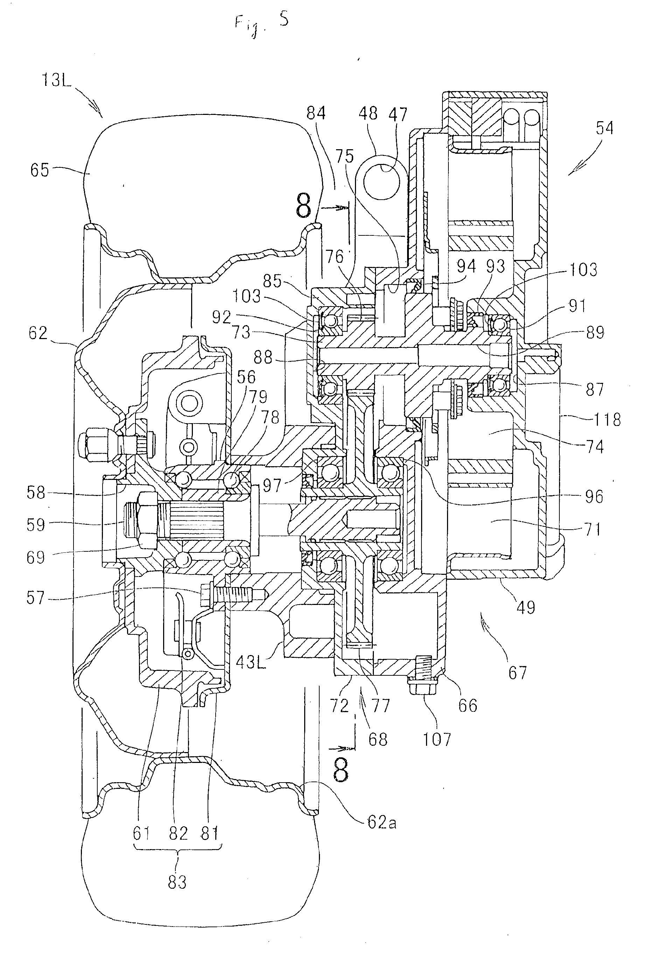

The attached form of the wheel is described in detail with regard to Fig. 5.

As shown in Fig. 5, the rear wheel 13L includes the wheel 62 which has a bowl-shaped recessed portion 62a and a tire 65 which is mounted on the wheel 62.

The drive unit 54 is formed by attaching an electric motor 67 to one surface of a centre case 66 and by attaching a reducer 68 to the other surface of the centre case 66.

The electric motor 67 includes a bottomed-tube-shaped motor case 49 fastened to the centre case 66, a stator 71 attached to the motor case 49, a motor shaft 73 rotatably supported at one end by the motor case 49 and rotatably supported at the other end by a reducer case 72, and a rotor 74 attached to the motor shaft 73 and surrounded by the stator 71.

The centre case 66 is a vertically elongate member and has a through hole 75 through which the motor shaft 73 passes.

The reducer 68 includes the bottomed-tube-shaped reducer case 72 fastened to the centre case 66, a small-diameter drive gear 76 provided at a laterally outer end of the motor shaft 73 and housed in the reducer case 72, a large-diameter driven gear 77 rotated by the drive gear 76 directly or via an intermediate gear and housed in the reducer case 72, and the output shaft 59 which is rotated by the driven gear 77 and configured to rotate the wheel 62.

An inner race 79 is provided inside the bearing case 56, with rolling elements 78 provided between the inner race 79 and the bearing case 56, and the output shaft 59 is spline-coupled to the inner race 79. Specifically, a laterally outer end of the output shaft 59 is rotatably supported by the bearing case 56, and radial displacement (deflection) is thereby prevented.

Further, the wheel supporting member 58 is fixed to the front end of the output shaft 59 with a nut 69. The wheel 62 is thereby caused to rotate by rotation of the output shaft 59. An upward load acting on the rear wheel 13L is transmitted to the wheel supporting member 58, the output shaft 59, and the inner race 79 in this order. Since the wheel supporting member 58 and the inner race 79 are in contact with each other in an axial direction and a protruding length of the output shaft 59 from the inner race 79 is short, the upward load acting on the rear wheel 13L is supported by the inner race 79 and is then supported by the knuckle 43L via the bearing case 56.

Since almost no bending moment acts on the output shaft 59, the output shaft 59 can be designed exclusively for rotary power transmission. Accordingly, the diameter of the output shaft 59 can be reduced.

A brake base plate 81 is fixed to an outer periphery of the bearing case 56. Brake shoes and a shoe expanding part 82 are attached to the brake base plate 81.

The brake drum 61 is fixed to the wheel supporting member 58. Braking of the rear wheel 13L can be performed by causing the brake shoes to slide in contact with an inner peripheral surface of the brake drum 61.

A brake device 83 including the brake drum 61, the brake base plate 81, the brake shoes, and the shoe expanding part 82 which are described above is provided in the recessed portion 62a of the wheel 62.

Moreover, in a rear view of the vehicle (and also in a front view), there is formed a rectangular space 84 surrounded from three sides by the tire 65, the reducer case 72, and the centre case 66. The joint portion 47 for connecting the upper arm portion 48 and the upper arm 41 L to each other is disposed in the rectangular space 84.

Since the joint portion 47 is disposed in the rectangular space 84, connection work and separation work of the joint portion 47 can be performed easily using the rectangular space 84 as a work space. Accordingly, the work time can be reduced.

Moreover, a bearing supporting portion 85 supporting the outer end of the motor shaft 73 is provided in the reducer case 72. The bearing supporting portion 85 protrudes into the recessed portion 62a while extending at a lateral side of the knuckle 43L.

In other words, the reducer case 72 (which is part of the drive unit 54) is partially housed in the recessed portion 62a of the wheel 62. The drive unit 54 can thus be located closer to the rear wheel (drive wheel) 13L by an amount corresponding to the housed portion. Accordingly, it is possible to dispose part of the drive unit 54 inside the wheel 62 and thereby suppress protrusion of the drive unit 54 to a small degree.

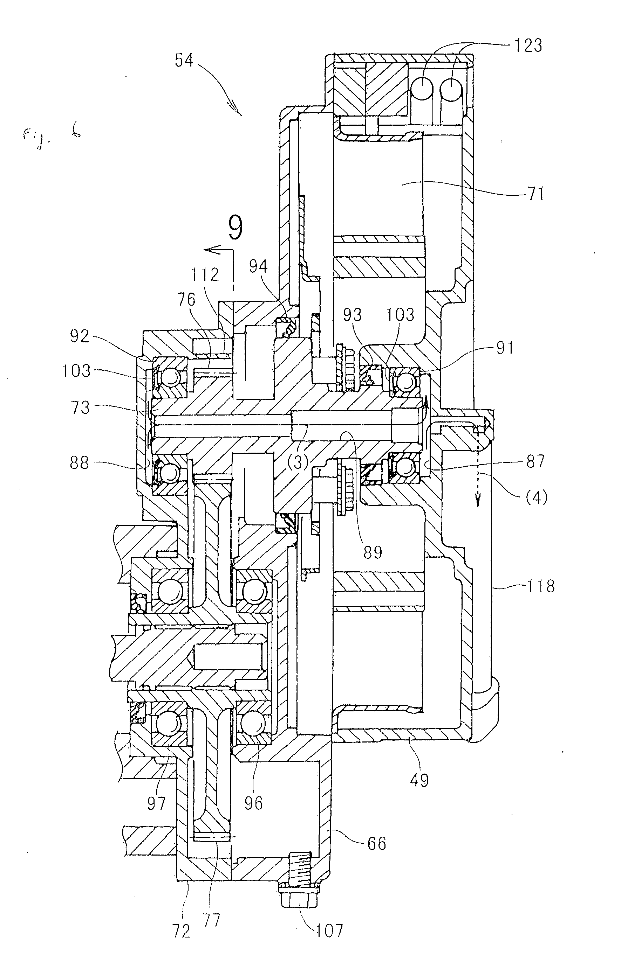

A cross section of a portion of the drive unit 54 is shown in Fig. 6.

As shown in Fig. 6, a first oil pocket portion 87 in which oil is reserved or held is provided between one end of the motor shaft 73 and the motor case 49, while a second oil pocket portion 88 in which oil is reserved or held is provided between the other end of the motor shaft 73 and the reducer case 72. A motor-shaft oil passage 89 through which oil reserved in the second oil pocket portion 88 flows to the first oil pocket portion 87 is provided in the motor shaft 73.

The one end of the motor shaft 73 is supported by the motor case 49 via a first bearing 91, while the other end of the motor shaft 73 is supported by the reducer case 72 via a second bearing 92. A first sealing member 93 such as an oil seal is fitted between the motor shaft 73 and the motor case 49 in a portion which is nearer to the second bearing 92 than the first bearing 91 is. Moreover, a second sealing member 94 is fitted between the motor shaft 73 and the centre case 66 in a portion which is nearer to the second bearing 92 than the first sealing member 93 is.

A space inside the electric motor and a space inside the reducer are partitioned from each other by the second sealing member 94.

One end of the driven gear 77 is supported by the centre case 66 via a third bearing 96, while the other end of the driven gear 77 is supported by the reducer case 72 via a fourth bearing 97.

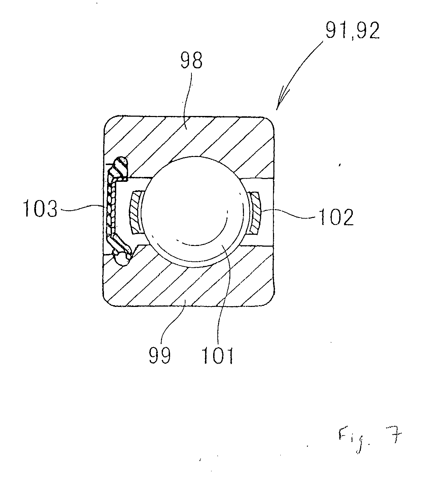

As shown in Fig. 7, the first bearing 91 and the second bearing 92 are each a single seal bearing including an outer race 98, an inner race 99, rolling bodies 101 such as balls or rollers, a retainer 102 for aligning the multiple rolling bodies 101 at a regular pitch, and a sealing member 103 sealing one side of the rolling bodies 101. The sealing member 103 prevents oil from leaking from one side (the left side in the drawing) of the bearing 91, 92.

As shown in Fig. 6, the first bearing 91 is disposed such that the sealing member 103 is disposed on the side closer to the second bearing 92, while the second bearing 92 is disposed such that the sealing member 103 is disposed on the side closer to the second oil pocket portion 88.

The oil reserved in the first oil pocket portion 87 is blocked by the sealing member 103 of the first bearing 91, and the first bearing 91 is thereby lubricated. Since the first sealing member 93 is provided on the side of the first bearing 91 which is closer to the second bearing 92, the sealing member 103 of the first bearing 91 could be omitted. However, if the first bearing 91 has no sealing member 103, the oil reserved in the first oil pocket portion 87 reaches as far as the first sealing member 93. Accordingly, the level of the oil reserved in the first oil pocket portion 87 may drop. In contrast, when the sealing member 103 is provided in the first bearing 91 to block the oil, it is possible to raise the level of the oil reserved in the first oil pocket portion 87 and thereby promote the lubrication of the first bearing 91.

The sealing member 103 of the second bearing 92 serves to separate the second oil pocket portion 88 and the second bearing 92 from each other. In other words, the sealing member 103 of the second bearing 92 has the effect of raising the level of the oil reserved in the second oil pocket portion 88. It also has the effect of ensuring that the second bearing 92 is filled with oil thrown up by the driven gear 77 and the drive gear 76.

The first bearing 91 and the second bearing 92 are single seal bearings including (incorporating) a sealing member 103. Similar effects could be obtained by providing an oil seal attached beside the first bearing 91 and an oil seal disposed beside the second bearing 92; however, this would increase the number of parts and increase the dimension in the axial direction, so that a compact design could not be achieved. Instead, the use in the present invention of single seal bearings in which the sealing members 103 are incorporated in the bearings makes it possible to reduce the number of parts and also to reduce the axial dimension.

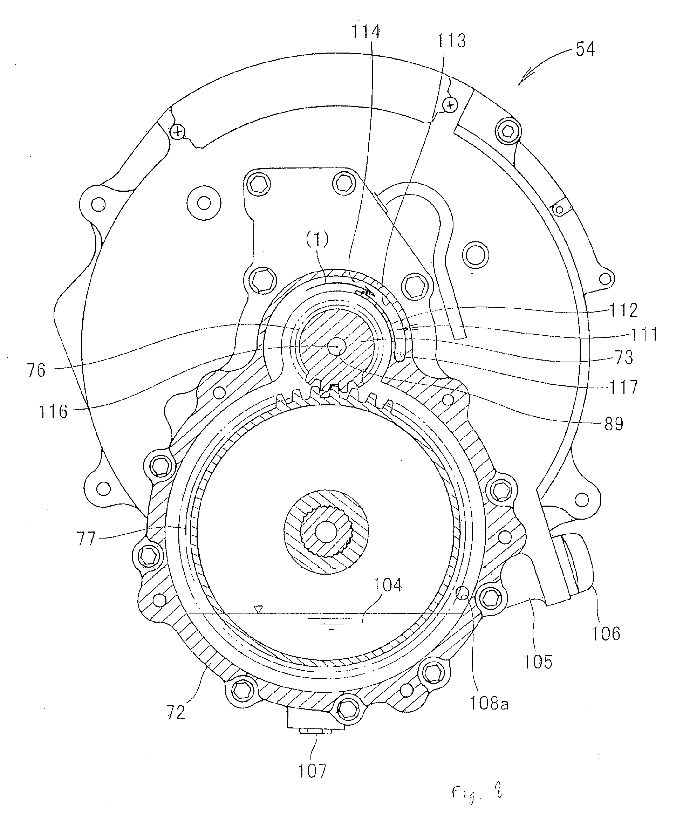

As shown in Fig. 8, which is a cross-sectional view taken along the line 8-8 of Fig. 5, a predetermined amount of oil 104 is reserved or held in a lower portion of the reducer case 72. The oil 104 is supplied from an oil filler 105. It is preferable that a cap 106 with a gauge is attached to the oil filler 105 and the level of the oil 104 is monitored with the gauge.

The oil filler 105 is provided in the centre case 66 because, as shown in Fig. 5, the centre case 66 has a larger width than the reducer case 72. A drain plug 107 used for draining is also provided in the centre case 66 due to the same reason. However, one or both of the oil filler 105 and the drain plug 107 could be provided in the reducer case 72.

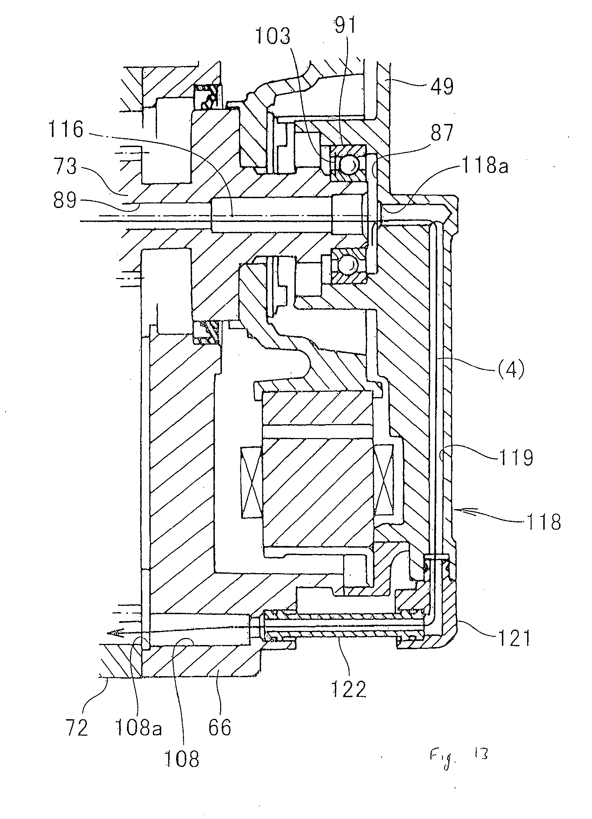

As shown in Fig. 8, an outlet 108a of a return oil passage (denoted by reference numeral 108 in Fig. 13) opens slightly above an oil surface of the oil 104. Moreover, an oil receiving portion 111 is provided along the periphery of the small-diameter drive gear 76.

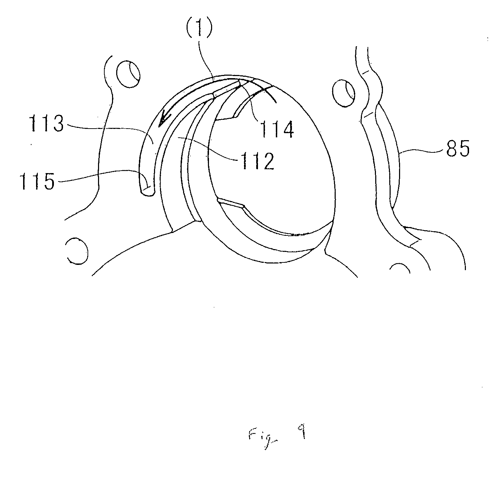

As shown in Fig. 9, the oil receiving portion 111 is an arcuate groove 113 formed by an arcuate wall 112 which stands in the reducer case 72 to surround the drive gear (denoted by reference numeral 76 in Fig. 8). An upper portion of the arcuate groove 113 is open at an opening portion 114 and a lower portion 115 thereof is closed.

As shown in Fig. 8, the opening portion 114 is provided above a centre of rotation 116 of the motor shaft 73. A greater head (hydraulic head) can be obtained by providing the opening portion 114 at a higher position.

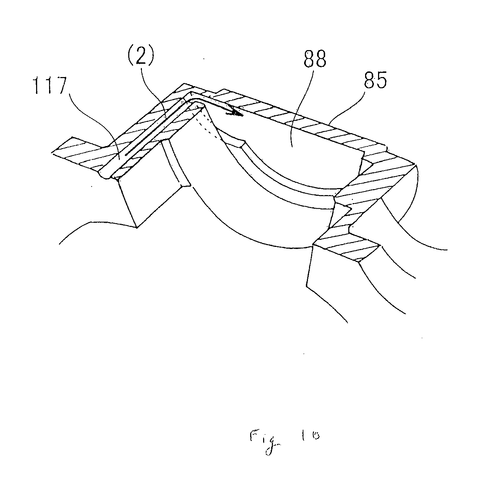

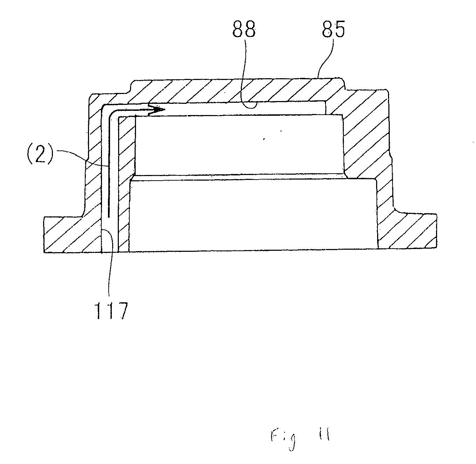

As shown in Fig. 10, a communication hole 117 leads from the lower portion 115 of the arcuate groove 113, in parallel with the motor shaft 73, and a front end of the communication hole 117 is connected to the second oil pocket portion 88 (see Fig. 11).

As shown in Fig. 8 by a dotted line, the communication hole 117 is provided below the centre of rotation 116 of the motor shaft 73. Since the communication hole 117 is provided below the centre of rotation 116, the oil reserved in the oil receiving portion 111 can smoothly flow to the second oil pocket portion (denoted by reference numeral 88 in Fig. 10) via the communication hole 117 by the effect of gravity.

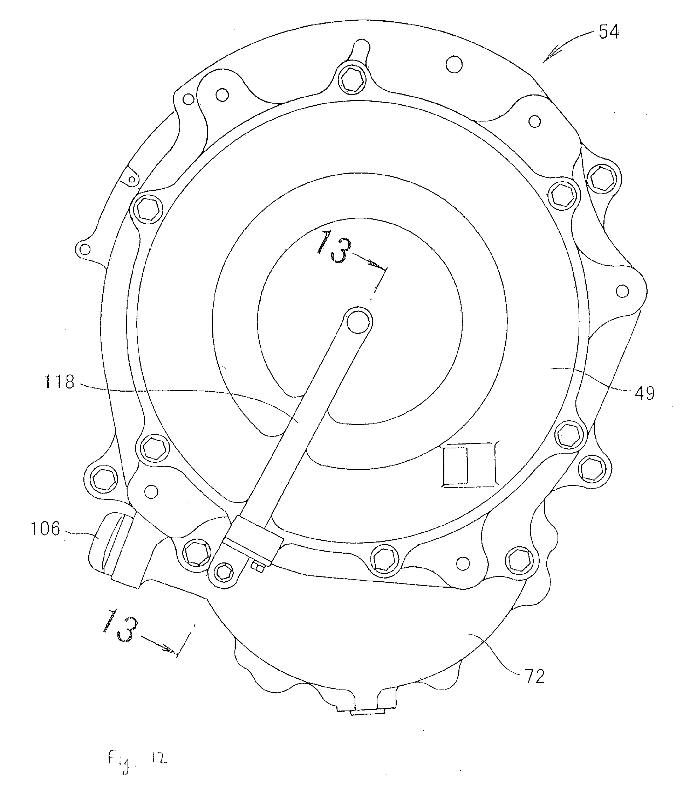

As shown in Fig. 12, which is a view of a side surface of the drive unit 54, a discharged oil passage 118 is provided in a side surface of the motor case 49.

As shown in Fig. 13, which is a cross-sectional view taken along the line 13-13 of Fig. 12, the discharged oil passage 118 is a passage for discharging oil from the first oil pocket portion 87 and includes an in-case oil passage 119 provided in the motor case 49, a 90° elbow 121 connected to an outlet of the in-case oil passage 119, and a connection tube 122 connecting an outlet of the 90° elbow 121 and the centre case 66.

The return oil passage 108 is arranged in the centre case 66 so as to be almost horizontal.

The 90° elbow 121 is a plug-in fitting, and both ends of the connection tube 122 are also plug-in ends. In this example, the in-case oil passage 119 and the return oil passage 108 are attachably and detachably connected, unlike the case where the entire discharged oil passage 118 and the entire return oil passage 108 are formed in the motor case 49 and the centre case 66. Hence, formation of the discharged oil passage 118 is facilitated.

In the embodiment, an inlet 118a of the discharged oil passage 118 is located at a height almost equal to that of the centre of rotation 116 of the motor shaft 73.

Since the inlet 118a of the discharged oil passage 118 is at a low height, the oil reserved in the first oil pocket portion 87 can be efficiently discharged to the discharged oil passage 118. In consideration of the discharge of oil, it is preferable for the inlet 118a of the discharged oil passage 118 to be provided at a height equal to or lower than that of the centre of rotation 116 of the motor shaft 73.

Moreover, the return oil passage 108 is located at a height almost equal to that of a bottom surface of the motor case 49. As shown in Fig. 6, a bottom surface of the centre case 66 and a bottom surface of the reducer case 72 are located below the bottom surface of the motor case 49.

In Fig. 13, the return oil passage 108 is at a height almost equal to that of the bottom surface of the motor case 49. Accordingly, the discharged oil passage 118 can be extended to the bottom surface of the motor case 49. Specifically, the discharged oil passage 118 extends from a portion near the centre of rotation 116 of the motor shaft 73 to the bottom surface of the motor case 49. Hence, the height dimension of the discharged oil passage 118 can be increased. The head (hydraulic head) is thereby increased, and the oil inside the discharged oil passage 118 can efficiently flow down and quickly return into the reducer case 72.

Next, a description will be given of the flow of oil in the drive unit 54 having the configuration described above.

In Fig. 8, the oil 104 is held in the reducer case 72 in such a way that part of the driven gear 77 is immersed in the oil 104. The oil 104 is thrown up by the rotating driven gear 77 and the rotating drive gear 76.

The oil receiving part 111 receives part of the thrown-up oil as shown by the arrow (1) in Fig. 8.

The rest of the thrown-up oil is used to lubricate the second bearing 92, the third bearing 96, and the fourth bearing 97 shown in Fig. 6. Thereafter, the oil drops and returns to the lower portion of the reducer case 72.

The oil received by the oil receiving portion 111 is supplied to the second oil pocket portion 88 via the communication hole 117, as shown by the arrow (2) in Figs. 10 and 11.

In Fig. 6, the oil is supplied from the second oil pocket portion 88 to the first oil pocket portion 87 through the motor-shaft oil passage 89 as shown by the arrow (3). The first bearing 91 is lubricated with the oil reserved in the first oil pocket portion 87.

In Fig. 13, the oil which is reserved in the first oil pocket portion 87 and which lubricates the first bearing 91 returns to the lower portion of the reducer case 72 through the discharged oil passage 118 and the return oil passage 108 as shown by the arrow (4).

In Fig. 6, the oil flows through the motor-shaft oil passage 89 as shown by the arrow (3). Accordingly, the oil does not leak into the motor case 49, so that the inside of the motor case 49 is "dry". Although wires 123 extending from the stator 71 penetrate the motor case 49 and extend to the outside, no sealing measures are required in this penetrating portion. Thus, a seal in the penetrating portion can be a simple one such as a dust seal, so that at least the preferred embodiment of the present invention provides a drive unit in which the sealing structure for the motor can be simplified.

The drive unit of the present invention is suitable for an electric vehicle.

## Claims

1. A drive unit (54) which includes: a centre case (66); a motor case (49) attached to one side surface of the centre case (66) and supporting a stator (71); a reducer case (72) attached to another side surface of the centre case (66); a motor shaft (73) penetrating the centre case (66), supporting a rotor (74), and having one end supported by the motor case (49) via a first bearing (91);
a drive gear (76) provided on the motor shaft (73) and housed in the reducer case (72); a driven gear (77) rotated by a drive force of the drive gear (76) and having one end supported by the centre case (66) via a third bearing (96) and another end supported by the reducer case (72) via a fourth bearing (97); and an output shaft (59) extending from the driven gear (77) to penetrate the reducer case (72), and in which a motor output is reduced in speed and then outputted from the output shaft (59),
wherein
oil (104) is held in the reducer case (72) in such a way that part of the driven gear (77) is immersed in the oil (104),
a first oil pocket portion (87) in which oil is reserved is provided between the one end of the motor shaft (73) and the motor case (49),
a second oil pocket portion (88) in which oil is reserved is provided between the other end of the motor shaft (73) and the reducer case (72),
the motor shaft (73) is provided with a motor-shaft oil passage (89) through which oil reserved in the second oil pocket portion (88) can flow to the first oil pocket portion (87), **characterized in that** the motor shaft has another end supported by the reducer case (72) via a second bearing (92), the first bearing (91) and the second bearing (92) each include a seal (103, 103) configured to partition a corresponding one of the pocket portions (87, 88) from an adjacent chamber, the reducer case (72) is provided with an oil receiving portion (111) configured to receive thrown-up oil in a portion surrounding the drive gear (76) and is also provided with a communication hole (117) through which oil reserved in the oil receiving portion (111) can flow to the second oil pocket portion (88),
the motor case (49) is provided with a discharged oil passage (118) through which oil reserved in the first oil pocket portion (87) can be discharged, and
the centre case (66) is provided with a return oil passage (108) which is connected to the discharged oil passage (118) and through which oil from the discharged oil passage (118) can be returned into the reducer case (72).

2. The drive unit according to claim 1, wherein
the first bearing (91) is a single seal bearing including an outer race (98), an inner race (99), a rolling body (101), and a sealing member (103) sealing a space between the outer race (98) and the inner race (99) in a portion which is closer to the second bearing (92) than the rolling body (101) is, and
the second bearing (92) is a single seal bearing including an outer race (98), an inner race (99), a rolling body (101), and a sealing member (103) sealing a space between the outer race (98) and the inner race (99) in a portion which is closer to the second oil pocket portion (88) than the rolling body (101) is.

3. The drive unit according to claim 1 or claim 2, wherein the oil receiving portion (111) includes a pocket-shaped arcuate groove (113) formed by an arcuate wall (112) which stands in the reducer case (72) to surround the drive gear (76), and an opening portion (114) configured to receive oil thrown up by the drive gear (76) in a tangential direction is formed in an upper portion of the arcuate groove (113).

4. The drive unit according to claim 3, wherein the opening portion (114) is disposed above a rotation centre (116) of the motor shaft (73) and the communication hole (117) is arranged below the opening portion (114).

5. The drive unit according to any preceding claim, wherein an inlet (118a) of the discharged oil passage (118) is provided at a height equal to or lower than that of a rotation centre (116) of the motor shaft (73).

6. The drive unit according to any preceding claim, wherein a bottom surface of the centre case (66) and a bottom surface of the reducer case (72) are arranged below a bottom surface of the motor case (49) and the return oil passage (108) is arranged at a height almost equal to that of the bottom surface of the motor case (49).

7. The drive unit according to any preceding claim, wherein the centre case (66) is provided with an oil filler (105) into which oil can be poured.

## Patentansprüche

1. Antriebseinheit (54), die Folgendes beinhaltet: ein mittleres Gehäuse (66), ein Motorgehäuse (49), das an einer Seitenfläche des mittleren Gehäuses (66) angebracht ist und einen Stator (71) trägt, ein Vorgelegegehäuse (72), das an einer anderen Seitenfläche des mittleren Gehäuses (66) angebracht ist, eine Motorwelle (73), die das mittlere Gehäuse (66) durchdringt, einen Rotor (74) trägt und deren eines Ende über ein erstes Lager (91) vom Motorgehäuse (49) getragen wird, ein an der Motorwelle (73) bereitgestelltes Antriebsritzel (76), das im Vorgelegegehäuse (72) beherbergt ist, ein angetriebenes Ritzel (77), das durch eine Antriebskraft des Antriebsritzels (76) gedreht wird und dessen eines Ende über ein drittes Lager (96) vom mittleren Gehäuse (66) getragen wird und dessen anderes Ende über ein viertes Lager (97) vom Vorgelegegehäuse (72) getragen wird, und eine Abtriebswelle (59), die sich vom angetriebenen Ritzel (77) so erstreckt, dass sie das Vorgelegegehäuse (72) durchdringt, und in der eine Motorleistung in der Drehzahl vermindert und dann von der Abtriebswelle (59) ausgegeben wird,
wobei
Öl (104) derart im Vorgelegegehäuse (72) gehalten wird, dass ein Teil des angetriebenen Ritzels (77) in das Öl (104) eingetaucht ist,
ein erster Öltaschenabschnitt (87), in dem Öl vorgehalten wird, zwischen dem einen Ende der Motorwelle (73) und dem Motorgehäuse (49) bereitgestellt ist,
ein zweiter Öltaschenabschnitt (88), in dem Öl vorgehalten wird, zwischen dem anderen Ende der Motorwelle (73) und dem Vorgelegegehäuse (72) bereitgestellt ist,
die Motorwelle (73) mit einem Motorwellen-Öldurchlass (89) bereitgestellt ist, durch den im zweiten Öltaschenabschnitt (88) vorgehaltenes Öl zum ersten Öltaschenabschnitt (87) strömen kann, **dadurch gekennzeichnet, dass** die Motorwelle ein anderes Ende aufweist, das über ein zweites Lager (92) vom Vorgelegegehäuse (72) getragen wird, das erste Lager (91) und das zweite Lager (92) jeweils eine Dichtung (103, 103) beinhalten, die dafür gestaltet ist, einen jeweiligen der Taschenabschnitte (87, 88) von einer angrenzenden Kammer abzutrennen,
das Vorgelegegehäuse (72) mit einem ölaufnehmenden Abschnitt (111) bereitgestellt ist, der dafür gestaltet ist, aufgeworfenes Öl in einem das Antriebsritzel (76) umgebenden Abschnitt aufzunehmen, und auch mit einer Verbindungsöffnung (117) bereitgestellt ist, durch die im ölaufnehmenden Abschnitt (111) vorgehaltenes Öl zum zweiten Öltaschenabschnitt (88) strömen kann,
das Motorgehäuse (49) mit einem Durchlass für abgelassenes Öl (118) bereitgestellt ist, durch den im ersten Öltaschenabschnitt (87) vorgehaltenes Öl abgelassen werden kann, und
das mittlere Gehäuse (66) mit einem Ölrückführungsdurchlass (108) bereitgestellt ist, der an den Durchlass für abgelassenes Öl (118) angeschlossen ist und durch den Öl vom Durchlass für abgelassenes Öl (118) in das Vorgelegegehäuse (72) zurückgeführt werden kann.

2. Antriebseinheit nach Anspruch 1, wobei
das erste Lager (91) ein Lager mit einer einzelnen Dichtung ist, das einen äußeren Laufring (98), einen inneren Laufring (99), einen Rollkörper (101) und ein Dichtungselement (103) beinhaltet, welches einen Raum zwischen dem äußeren Laufring (98) und dem inneren Laufring (99) in einem Abschnitt abdichtet, der näher zum zweiten Lager (92) liegt als der Rollkörper (101), und
das zweite Lager (92) ein Lager mit einer einzelnen Dichtung ist, das einen äußeren Laufring (98), einen inneren Laufring (99), einen Rollkörper (101) und ein Dichtungselement (103) beinhaltet, welches einen Raum zwischen dem äußeren Laufring (98) und dem inneren Laufring (99) in einem Abschnitt abdichtet, der näher zum zweiten Öltaschenabschnitt (88) liegt als der Rollkörper (101).

3. Antriebseinheit nach Anspruch 1 oder Anspruch 2, wobei der ölaufnehmende Abschnitt (111) eine taschenförmige gebogene Rille (113) beinhaltet, die von einer gebogenen Wand (112) gebildet wird, die im Vorgelegegehäuse (72) steht, um das Antriebsritzel (76) zu umgeben, und in einem oberen Abschnitt der gebogenen Rille (113) ein Öffnungsabschnitt (114) gebildet ist, der dafür gestaltet ist, Öl aufzunehmen, das vom Antriebsritzel (76) in tangentialer Richtung aufgeworfen wird.

4. Antriebseinheit nach Anspruch 3, wobei der Öffnungsabschnitt (114) oberhalb eines Drehpunkts (116) der Motorwelle (73) angeordnet ist und die Verbindungsöffnung (117) unterhalb des Öffnungsabschnitts (114) angeordnet ist.

5. Antriebseinheit nach einem der vorhergehenden Ansprüche, wobei ein Einlass (118a) des Durchlasses für abgelassenes Öl (118) auf einer Höhe bereitgestellt ist, die gleich oder niedriger als die des Drehpunkts (116) der Motorwelle (73) ist.

6. Antriebseinheit nach einem der vorhergehenden Ansprüche, wobei eine Unterseite des mittleren Gehäuses (66) und eine Unterseite des Vorgelegegehäuses (72) unterhalb einer Unterseite des Motorgehäuses (49) angeordnet sind und der Ölrückführungsabschnitt (108) auf einer Höhe angeordnet ist, die fast gleich der der Unterseite des Motorgehäuses (49) ist.

7. Antriebseinheit nach einem der vorhergehenden Ansprüche, wobei das mittlere Gehäuse (66) mit einem Öleinfüllstutzen (105) bereitgestellt ist, in den Öl gegossen werden kann.

## Revendications

1. Unité d'entraînement (54) qui comprenant une caisse centrale (66) ; un bâti de moteur (49) fixé à une surface latérale de la caisse centrale (66) et supportant un stator (71) ; une caisse de réducteur (72) fixée à une autre surface latérale de la caisse centrale (66) ; un arbre moteur (73) pénétrant dans la caisse centrale (66), supportant un rotor (74) et ayant une extrémité supportée par le bâti de moteur (49) via un premier palier (91), une roue dentée menante (76) ménagée sur l'arbre moteur (73) et logée dans la caisse de réducteur (72) ; une roue dentée menée (77) entraînée en rotation par une force d'entraînement de la roue dentée menante (76) et ayant une extrémité supportée par la caisse centrale (66) via un troisième palier (96) et une autre extrémité supportée par la caisse de réducteur (72) via un quatrième palier (97) ; et un arbre de sortie (59) s'étendant de la roue dentée menée (77) pour pénétrer dans la caisse de réducteur (72) et dans lequel une sortie motrice est réduite en vitesse, puis délivrée par l'arbre de sortie (59),
dans laquelle :
de l'huile (104) est confinée dans la caisse de réducteur (72) de manière qu'une partie de la roue dentée menée (77) soit immergée dans de l'huile (104),
une première partie à poche d'huile (87) dans laquelle est conservée de l'huile est prévue entre la première extrémité de l'arbre moteur (73) et le bâti de moteur (49),
une seconde partie à poche d'huile (88) dans laquelle est conservée de l'huile est ménagée entre l'autre extrémité de l'arbre moteur (73) et la caisse de réducteur (72),
l'arbre moteur (73) est pourvu d'un passage d'huile d'arbre moteur (89) à travers lequel l'huile conservée dans la seconde partie à poche d'huile (88) peut s'écouler vers la première partie à poche d'huile (87), **caractérisée en ce que** l'arbre moteur a une autre extrémité supportée par la caisse de réducteur (72) via un deuxième palier (92),
le premier palier (91) et le deuxième palier (92) comprennent chacun un joint étanche (103,103) configuré pour séparer l'une correspondante des parties à poche (87, 88) d'une chambre adjacente,
la caisse de réducteur (72) est pourvue d'une partie réceptrice d'huile (111) configurée pour recevoir l'huile projetée dans une partie entourant la roue dentée menante (76) et est également pourvue d'un trou de communication (117) à travers lequel l'huile conservée dans la partie réceptrice d'huile (111) peut s'écouler dans la seconde partie à poche d'huile (88),
le bâti de moteur (49) est pourvu d'un passage d'huile déchargée (118) à travers lequel l'huile conservée dans la première partie à poche d'huile (87) peut être déchargée, et
la caisse centrale (66) est pourvue d'un passage d'huile de retour (108) qui est raccordé au passage d'huile déchargée (118) et à travers lequel de l'huile provenant du passage d'huile déchargée (118) peut être renvoyée dans la caisse de réducteur (72).

2. Unité d'entraînement selon la revendication 1, dans laquelle :
le premier palier (91) est un palier à joint étanche unique comprenant une voie de roulement externe (98), une voie de roulement interne (99), un corps roulant (140) et un élément d'étanchéité (103) étanchant un espace entre la voie de roulement externe (98) et la voie de roulement interne (99) dans une partie qui est plus proche du deuxième palier (92) que du corps roulant (101), et
le deuxième palier (92) est un palier à joint étanche unique comprenant une voie de roulement externe (98), une voie de roulement interne (99), un corps roulant (101) et un élément d'étanchéité (103) étanchant un espace entre la voie de roulement externe (98) et la voie de roulement interne (99) dans une partie qui est plus proche de la seconde partie à poche d'huile (88) que le corps roulant (101) .

3. Unité d'entraînement selon la revendication 1 ou la revendication 2, dans laquelle la partie réceptrice d'huile (111) comprend une rainure arquée (113) formée en poche par une paroi arquée (112) qui se dresse dans la caisse de réducteur (72) pour entourer la roue dentée menante (76) et une partie d'ouverture (114) configurée pour recevoir l'huile projetée par la roue dentée menante (76) dans une direction tangentielle est formée dans une partie supérieure de la rainure arquée (113).

4. Unité d'entraînement selon la revendication 3, dans laquelle la partie d'ouverture (114) est disposée au-dessus d'un centre de rotation (116) de l'arbre moteur (73) et le trou de communication (117) est ménagé en dessous de la partie d'ouverture (114).

5. Unité d'entraînement selon l'une quelconque des revendications précédentes, dans laquelle une entrée (118a) du passage d'huile déchargée (118) est ménagée à une hauteur égale ou inférieure à celle d'un centre de rotation (116) de l'arbre moteur (73) .

6. Unité d'entraînement selon l'une quelconque des revendications précédentes, dans laquelle une surface inférieure de la caisse centrale (66) et une surface inférieure de la caisse de réducteur (72) sont aménagées en dessous d'une surface inférieure du bâti de moteur (49) et le passage d'huile de retour (108) est aménagé à une hauteur presque égale à celle de la surface inférieure du bâti de moteur (49).

7. Unité d'entraînement selon l'une quelconque des revendications précédentes, dans laquelle la caisse centrale (66) est pourvue d'un remplisseur d'huile (105) dans lequel de l'huile peut être versée.
